# EUROPÄISCHE PATENTSCHRIFT

(11) **EP 1 650 114 B1**
(45) Veröffentlichungstag und Bekanntmachung des Hinweises auf die Patenterteilung: **16.07.2008**
(21) Anmeldenummer: 05021926.0
(22) Anmeldetag: 07.10.2005
(51) Int. Cl.: B62D 35/00

(54) **Aerodynamische Verkleidung für ein Kraftfahrzeug**
Aerodynamic fairing for motor vehicles
Dispositif de carenage pour véhicules automobiles

(30) Priorität: 22.10.2004 DE 102004051672
(43) Veröffentlichungstag der Anmeldung: 26.04.2006
(73) Patentinhaber: Bayerische Motorenwerke Aktiengesellschaft, 80809 München (DE)
(72) Erfinder: Dick, Alfred, 85716 Unterschleissheim (DE); Adler, Stefan, 80809 München (DE); Schirner, Ralph, 80807 München (DE); Peters, Christopher, 80539 München (DE); Mayer, Jochen, 85356 Freising (DE); Holzinger, Thomas, 81735 München (DE)

(56) Entgegenhaltungen:
- EP-A2- 0 897 029
- WO-A-02/051688
- DE-A1- 4 209 164
- DE-U1- 29 809 798

## Beschreibung

Die Erfindung betrifft eine aerodynamische Verkleidung für zumindest einen Teilbereich von äußeren seitlichen Längsträgern (Schwellern) von Aufbauten für Kraftwagen, wobei sich die Verkleidung hauptsächlich in vertikaler Richtung absenken und anheben lässt und wenigstens einen Hohlkörper mit einem veränderbaren Volumen aufweist.

Aus der DE 42 09 164 C2 ist eine gattungsbildende, aerodynamische Verkleidung bekannt. Dort ist ein Hohlkörper vorgesehen, der sich pneumatisch absenken und anheben lässt.

Aus der DE 298 09 798 U1 ist ein Abstandsgewebe bekannt, das als Material für externe Fahrzeugverkleidungen verwendbar ist.

Mit der vorliegenden Erfindung sollen nun weitere Möglichkeiten aufgezeigt werden, wie sich eine aerodynamische Verkleidung auch auf anderem Wege aktivieren lässt.

Hierzu dienen die im Anspruch 1 angegebenen Merkmale. Vorteilhafte Weiterbildungen ergeben sich aus den Unteransprüchen.

Die im Anspruch 1 angegebene Lösung hat den Vorteil, dass die aerodynamische Verkleidung eine hohe Steifigkeit und Formstabilität aufweist. Sie ist außenhautbeständig, erfordert keine kinematische oder mechanische Anbindung an die Unterschale und hat keine beweglichen Teile.

Weitere Vorteile und Merkmale der vorliegenden Erfindung ergeben sich aus der nachfolgenden detaillierten Beschreibung verschiedener Ausführungsbeispiele. Es zeigen:
- Fig. 1: eine Seitenansicht eines Kraftwagens im Bereich einer aerodynamischen Verkleidung;
- Fig. 2: eine erste Ausführungsform einer aerodynamischen Verkleidung in eingefahrenem Zustand;
- Fig. 3: die aerodynamische Verkleidung nach Fig. 2 in ausgefahrenem Zustand und
- Fig. 4: eine Detailansicht der aerodynamischen Verkleidung nach Fig. 2.

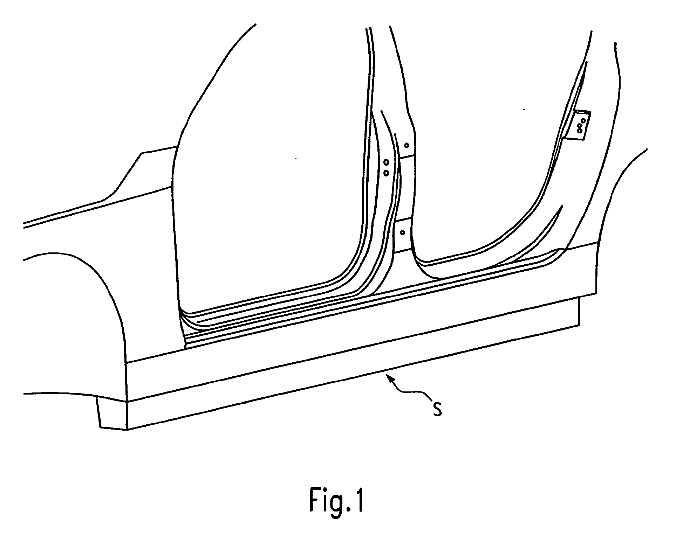

In Fig. 1 ist ein Kraftwagen im Bereich einer aerodynamischen Verkleidung S gezeigt. Bei dieser Verkleidung S handelt es sich um eine aktive Verkleidung S, die aus- und einfahrbar ist. Die aerodynamische Verkleidung S enthält ein Element 1, das in seinem Volumen veränderbar ist und dadurch die Größe der aerodynamischen Verkleidung S bestimmt.

Verschiedene Möglichkeiten, wie die Verkleidung S betätigt werden kann, sind in der nachfolgenden Beschreibung erläutert und in den Figuren dargestellt.

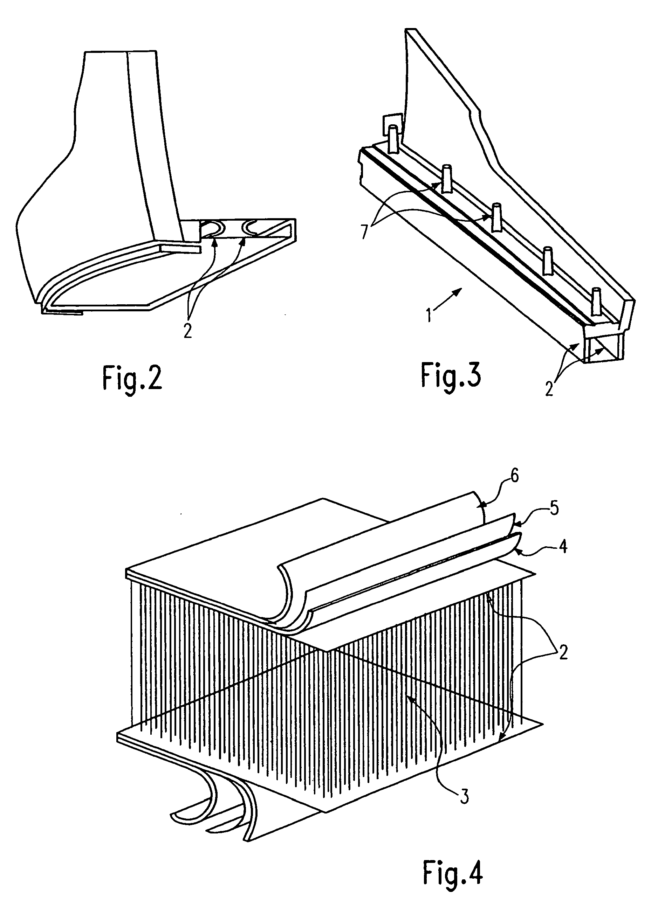

Die Fig. 2 bis 4 zeigen eine Ausführungsform, wie die aerodynamische Verkleidung S betätigt werden kann. Das Element 1 kann aus zumindest einem Abstandsgewebe 2 bestehen, wobei jedes Abstandsgewebe 2 wiederum zwei Lagen umfasst, zwischen denen Polfäden 3 angeordnet sind, die im ausgefahrenen Zustand in horizontaler oder vertikaler Richtung verlaufen. Die Lagen des Abstandsgewebes 2 können eine Haftgummierung 4, ein Deckgewebe 5 und eine Deckgummierung 6 aufweisen. Zur Verbindung der Abstandsgewebe 2 können noch eine Ober- und eine Unterschale vorgesehen sein.

Im eingefahrenen Zustand, etwa in Fig. 2, liegen die beiden Lagen des Abstandsgewebes 2 als auch die beiden Abstandsgewebe 2 eng aneinander, so dass das Abstandsgewebe 2 eine geringe Dicke aufweist. Zum Ausfahren der Verkleidung S wird so lange Fluid zwischen die beiden Lagen des Abstandsgewebes 2 geblasen, bis die Lagen entsprechend der Länge der Polfäden 3 voneinander beabstandet sind. Dieser Zustand ist in den Fig. 3 oder 4 gezeigt. Um die Verkleidung S wieder einzufahren, kann das Fluid zwischen den beiden Lagen des Abstandsgewebes 2 abgesaugt werden. Alternativ können aber auch Rückholmechanismen 7 vorgesehen sein, welche die beiden Lagen des Abstandsgewebes 2 wieder gegeneinander ziehen, sobald der Fluiddruck in dem Abstandsgewebe 2 nachlässt. Zur besseren Stabilisierung können die Rückholmechanismen 7 auch in Führungsbuchsen geführt sein. Zusätzlich kann eine vordere Kunststoffabdeckung vorgesehen sein, welche beispielsweise aus dem Radkasten nach unten ausfahrbar ist.

Die Abstandsgewebe 2 sind rund herum gasdicht verschlossen, ausgenommen der Fluid-Zuführ- und Abführöffnungen.

Bei der oben beschriebenen Ausführungsform ist das Element 1 in die Rohkarosserie integrierbar und/oder als eigenständiges Teil verbaubar.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente, wie er in den Ansprüchen definiert ist, zu verlassen.

## Patentansprüche

1. Aerodynamische Verkleidung (S) für zumindest einen Teilbereich von äußeren seitlichen Längsträgern bzw. Schwellern von Aufbauten für Kraftwagen, wobei sich die Verkleidung (S) hauptsächlich in vertikaler Richtung absenken und anheben lässt und wenigstens einen Hohlkörper mit einem veränderbaren Volumen aufweist, **dadurch gekennzeichnet, dass** die aerodynamische Verkleidung (S) ein Element (1) mit zumindest einem Abstandsgewebe (2) aufweist, dass das Volumen des Elements (1) pneumatisch vergrößerbar und mittels Rückholmechanismus (7) verkleinerbar ist und dass der Rückholmechanismus (7) zum Aufbringen der Rückholkraft in Führungsbuchsen geführt ist.

2. Aerodynamische Verkleidung nach Anspruch 1, **dadurch gekennzeichnet, dass** das Abstandsgewebe (2) zwei Lagen aufweist, die durch vertikal oder horizontal verlaufende Polfäden (3) verbunden sind.

3. Aerodynamische Verkleidung nach Anspruch 1 oder 2, **dadurch gekennzeichnet, dass** das Volumen des Elements (1) pneumatisch veränderbar ist.

4. Aerodynamische Verkleidung nach einem der Ansprüche 1 bis 3, **dadurch gekennzeichnet, dass** das Element (1) mit einer Ober- und/oder einer Unterschale versehen ist.

5. Aerodynamische Verkleidung nach einem der Ansprüche 1 bis 4, **dadurch gekennzeichnet, dass** das Element (1) zumindest in ausgefahrenem Zustand mit einer vorderen und/oder hinteren Kunststoffabdeckung (10) versehen ist.

6. Aerodynamische Verkleidung nach Anspruch 5, **dadurch gekennzeichnet, dass** die Kunststoffabdeckung (10) in vertikaler Richtung aus dem Radkasten ausfahrbar ist.

## Claims

1. An aerodynamic covering (S) for at least a part-region of outer lateral longitudinal bearers or sillboards of motor-vehicle bodies, wherein the covering (S) can be lowered and raised mainly in the vertical direction and comprises at least one hollow member having a variable volume, **characterised in that** the aerodynamic covering (S) comprises an element (1) with at least one spacer fabric (2), the volume of the element (1) can be pneumatically increased and reduced by a return mechanism (7) and the return mechanism (7) for applying the return force is guided in bushes.

2. An aerodynamic covering according to claim 1, **characterised in that** the spacer fabric (2) has two layers connected by vertical or horizontal pile threads (3).

3. An aerodynamic covering according to claim 1 or claim 2, **characterised in that** the volume of the element (1) is pneumatically variable.

4. An aerodynamic covering according to any of claims 1 to 3, **characterised in that** the element (1) comprises a top shell and/or a bottom shell.

5. An aerodynamic covering according to any of claims 1 to 4, **characterised in that** the element (1), at least when extended, has a front and/or rear plastics material cover (10).

6. An aerodynamic covering according to claim 5, **characterised in that** the plastics material cover (10) can be extended in the vertical direction out of the wheel case.

## Revendications

1. Habillage aérodynamique (S) pour au moins une zone partielle des longerons externes latéraux ou des seuils de porte de la carrosserie de véhicules automobiles, cet habillage pouvant se déployer vers le bas et se relever principalement en direction verticale et comprenant au moins un corps creux à volume variable,
**caractérisé en ce que**
l'habillage aérodynamique (S) présente un élément (1) avec au moins un tissu d'espacement (2), le volume de cet élément pouvant être augmenté pneumatiquement et diminué par l'intermédiaire d'un mécanisme de rappel (7) qui, pour guider la force de rappel, se déplace dans des douilles de guidage.

2. Habillage aérodynamique selon la revendication 1,
**caractérisé en ce que**
le tissu d'espacement (2) présente deux couches reliées par des fils (3) orientés verticalement et horizontalement.

3. Habillage aérodynamique selon la revendication 1 ou 2,
**caractérisé en ce que**
le volume de l'élément (1) peut varier pneumatiquement.

4. Habillage aérodynamique selon une des revendications 1 à 3,
**caractérisé en ce que**
l'élément (1) est équipé d'une coque supérieure et/ou d'une coque inférieure.

5. Habillage aérodynamique selon une des revendications 1 à 4,
**caractérisé en ce que**
l'élément (1), au moins à l'état déployé, est équipé en avant et/ou en arrière, d'une couverture en matière plastique (10).

6. Habillage aérodynamique selon la revendication 5,
**caractérisé en ce que**
la couverture en matière plastique (10) peut se déployer en direction verticale à partir du passage de roue.
